# EUROPEAN PATENT SPECIFICATION

(11) **EP 4 424 087 B1**
(45) Date of publication and mention of the grant of the patent: **09.12.2026**
(21) Application number: 21961631.5
(22) Date of filing: 25.10.2021
(51) Int. Cl.: H04W 72/04, H04L 5/00, H04L 27/00

(54) **SIDELINK SYNCHRONIZATION SIGNAL TRANSMISSION PRIORITIZATION**
PRIORISIERUNG DER ÜBERTRAGUNG VON SIDELINK-SYNCHRONISATIONSSIGNALEN
PRIORISATION DE TRANSMISSIONS DE SIGNAL DE SYNCHRONISATION DE LIAISON LATÉRALE

(43) Date of publication of application: 04.09.2024
(73) Proprietor: QUALCOMM INCORPORATED, San Diego, California 92121-1714 (US)
(72) Inventor: GUO, Shaozhen, San Diego, California 92121-1714 (US); SUN, Jing, San Diego, California 92121-1714 (US); XU, Changlong, San Diego, California 92121-1714 (US); ZHANG, Xiaoxia, San Diego, California 92121-1714 (US); PRAKASH, Rajat, San Diego, California 92121-1714 (US); XU, Hao, San Diego, California 92121-1714 (US); YANG, Luanxia, San Diego, California 92121-1714 (US); CHEN, Siyi, San Diego, California 92121-1714 (US)
(74) Representative: Tomkins & Co
(86) International application number: PCT/CN2021/125967
(87) International publication number: WO 2023/070239

(56) References cited:
- WO-A1-2020/215996
- WO-A1-2021/066619
- WO-A1-2021/162709
- WO-A1-2021/162709
- CN-A- 111 295 921
- US-A1- 2021 051 617
- VIVO: "In-device coexistence between NR and LTE sidelinks", vol. RAN WG1, no. Xi'an, China; 20190408 - 20190412, 2 April 2019 (2019-04-02), XP051707099, Retrieved from the Internet <URL:http://www.3gpp.org/ftp/tsg%5Fran/WG1%5FRL1/TSGR1%5F96b/Docs/R1%2D1904076%2Ezip> [retrieved on 20190402]
- SAMSUNG: "Sidelink Enhancement for 5G Advanced", vol. TSG RAN, no. Electronic Meeting; 20210628 - 20210702, 7 June 2021 (2021-06-07), XP052025746, Retrieved from the Internet <URL:https://ftp.3gpp.org/tsg_ran/TSG_RAN/TSGR_AHs/2021_06_RAN_Rel18_WS/Docs/RWS-210187.zip RWS-210187 Sidelink enhancement for Rel-18_Samsung.pdf> [retrieved on 20210607]

## Description

### FIELD OF TECHNOLOGY

The following relates to wireless communications, including sidelink synchronization signal transmission prioritization.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

Relevant prior-art is represented by: WO 2020/215996 A1; VIVO: "In-device coexistence between NR and LTE sidelinks", 3GPP DRAFT, R1-1904076; SAMSUNG: "Sidelink Enhancement for 5G Advanced", 3GPP DRAFT, RWS-210187; WO 2021/162709 A1.

### SUMMARY

The described techniques relate to improved methods, systems, devices, and apparatuses that support sidelink synchronization signal transmission prioritization. Generally, the described techniques provide for a user equipment (UE) to prioritize a sidelink synchronization signal block (S-SSB) over another transmission (e.g., a sidelink message or an S-SSB with a lower synchronization priority). For instance, a user equipment (UE) may identify, in a radio frequency spectrum band a first resource for a sidelink synchronization signal block (S-SSB) and may perform a channel access procedure for the radio frequency spectrum band for the first resource. In a first example, a second resource for a sidelink message may overlap in time with the first resource and the UE may perform the channel access procedure based on the S-SSB being prioritized over the sidelink message. In a second example, the UE may perform the channel access procedure in accordance with a first value of a parameter for the channel access procedure associated with a first synchronization priority based on the UE being associated with the first synchronization priority. The UE may transmit an S-SSB over the first resource based on the channel access procedure indicating availability.

The present invention is defined by the attached independent claims. Other preferred embodiments may be found in the dependent claims.

### BRIEF DESCRIPTION OF THE DRAWINGS

FIG. 1 illustrates an example of a wireless communications system that supports sidelink synchronization signal transmission prioritization in accordance with aspects of the present disclosure.
FIGs. 2A and 2B illustrates examples of wireless communications systems that support sidelink synchronization signal transmission prioritization in accordance with aspects of the present disclosure.
FIG. 3 illustrates an example of a communications priority scheme that supports sidelink synchronization signal transmission prioritization in accordance with aspects of the present disclosure.
FIGs. 4A, 4B, and 4C illustrate examples of synchronization signal block prioritization schemes that support sidelink synchronization signal transmission prioritization in accordance with aspects of the present disclosure.
FIGs. 5A, 5B, and 5C illustrate example of synchronization signal block prioritization schemes that support sidelink synchronization signal transmission prioritization in accordance with aspects of the present disclosure.
FIGs. 6 and 7 show block diagrams of devices that support sidelink synchronization signal transmission prioritization in accordance with aspects of the present disclosure.
FIG. 8 shows a block diagram of a communications manager that supports sidelink synchronization signal transmission prioritization in accordance with aspects of the present disclosure.
FIG. 9 shows a diagram of a system including a device that supports sidelink synchronization signal transmission prioritization in accordance with aspects of the present disclosure.
FIGs. 10 and 11 show flowcharts illustrating methods that support sidelink synchronization signal transmission prioritization in accordance with aspects of the present disclosure.

### DETAILED DESCRIPTION

A first user equipment (UE) may communicate with other UEs using sidelink communications. For instance, the first UE may transmit a sidelink synchronization signal block (S-SSB) to a second UE. Additionally, the first UE may communicate with the other UEs in an unlicensed spectrum. In some such examples, the first UE may be constrained to perform a channel access procedure (e.g., listen before talk (LBT)) before transmitting the S-SSB. In some examples, multiple UEs may attempt to transmit in the unlicensed spectrum on a same resource at the same time. However, due to the constraint of performing the channel access procedure before transmitting, some or each but one of the multiple UEs may be unable to transmit on the resource. Thus, methods that enable UEs with higher priority transmissions to be more likely to successfully perform the channel access procedure as compared to UEs with lower priority transmissions may increase the likelihood that higher priority transmissions are communicated in the resource.

The present disclosure may describe methods that enable UEs to prioritize an S-SSB transmission over other transmissions when communicating in the unlicensed spectrum. For instance, the present disclosure may describe methods that enable UEs to prioritize an S-SSB over a physical sidelink control channel (PSCCH) or physical sidelink shared channel (PSSCH) transmission. In one example, a first resource for transmitting the S-SSB may have a starting time occurring before that of a second resource for transmitting a PSSCH or PSCCH transmission, where the first and second resources overlap in time. Thus, a channel access procedure for the first resource may be successful before a channel access procedure for the second resource. Accordingly, S-SSB transmissions may be prioritized over PSSCH and/or PSCCH transmissions.

Additionally or alternatively, the present disclosure may describe methods that enable UEs to prioritize an S-SSB of a first synchronization priority over an S-SSB of a second synchronization priority. For instance, within a time span for performing a channel access procedure, earlier resources for performing the channel access procedure may be used to access the channel for S-SSBs with a higher synchronization priority, whereas later resources may be used to access the channel for S-SSBs with a lower synchronization priority. Additionally or alternatively, a channel access procedure may have a different energy detection threshold (e.g., a higher threshold) for transmitting S-SSBs with the higher synchronization priority as compared to a channel access procedure for transmitting an S-SSB with a lower synchronization priority.

Aspects of the disclosure are initially described in the context of wireless communications systems. Additional aspects of the disclosure are described in the context of a communications prioritizations scheme of the disclosure are further illustrated by and described with reference to apparatus diagrams, system diagrams, and flowcharts that relate to sidelink synchronization signal transmission prioritization.

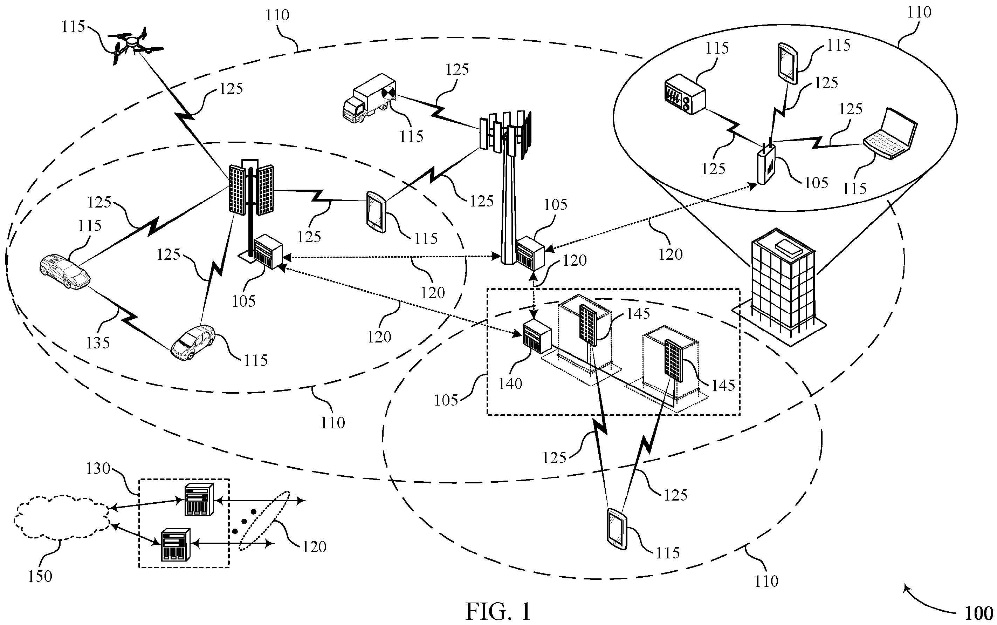

**FIG.** 1 illustrates an example of a wireless communications system 100 that supports sidelink synchronization signal transmission prioritization in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC). The UEs 115 may be designed to support ultra-reliable, low-latency, or critical functions. Ultra-reliable communications may include private communication or group communication and may be supported by one or more services such as push-to-talk, video, or data. Support for ultra-reliable, low-latency functions may include prioritization of services, and such services may be used for public safety or general commercial applications. The terms ultra-reliable, low-latency, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

In some examples, a UE 115 may derive its own synchronization from one or more sources (e.g., references). For instance, a UE 115 may derive its own synchronization from a global network satellite system (GNSS), a base station 105, another UE 115 (e.g., another UE 115 transmitting a sidelink synchronization signal (SLSS)), or its own internal clock. In some examples, a UE 115 may perform synchronization most accurately via GNSS or a base station 105, may perform synchronization less accurately via other UEs 115; and may perform synchronization least accurately via its own internal clock. Additionally, when performing synchronization via another UE 115, the UE 115 may perform synchronization more accurately when the other UE 115 is directly synchronized with GNSS or a base station 105 as compared to the other UE 115 being indirectly synchronized (e.g., being synchronized via a third UE 115 that may in turn be directly synchronized or indirectly synchronized). In some examples, a UE 115 may identify a set of priorities (e.g., synchronization priorities) among the synchronization references and search for the synchronization reference with the highest synchronization priority. For instance, S-SSB transmissions from UEs 115 that have direct synchronization may have a highest synchronization priority; UEs 115 that have indirect synchronization via another UE 115 with direct synchronization may have a lower synchronization priority than for direct synchronization; and UEs 115 that have indirect synchronization via another UE 115 with indirect synchronization may have a lower synchronization priority than for indirect synchronization where the other UE 115 has direct synchronization.

An example table is provided below for different sets of synchronization priorities:

**Table 1: Examples of Sets of Synchronization Priorities**

| **GNSS-based Synchronization: Case 1** | **GNSS-based Synchronization: Case 2** | **Base station based Synchronization** |
|---|---|---|
| **P0:GNSS** | **P0: GNSS** | **P0: Base Station** |
| **P1:UE directly synchronized to GNSS** | **P1: UE directly synchronized to GNSS** | **P1: UE directly synchronized to base station** |
| **P2: UE indirectly synchronized to GNSS** | **P2: UEs indirectly synchronized to GNSS** | |
| | | **P2: UEs indirectly synchronized to base station** |
| **P3: remaining UEs (e.g., UEs synchronized with UEs in P2)** | **P3: Base Station** | |
| | **P4: UEs directly synchronized to base station** | |
| | | **P3: GNSS** |
| | | **P4: UEs directly synchronized to GNSS** |
| | **P5: UEs indirectly synchronized to base station** | |
| | | **P5: UEs indirectly synchronized to GNSS** |
| | **P6: Other UEs (e.g., UEs synchronized to UEs in P2 or P5)** | **P6: Other UEs (e.g., UEs synchronized to UEs in P2 or P5)** |

In Table 1, P0 may represent the highest priority and P3 (for Case 1) or P6 (for the other cases) may represent the lowest priority. Additional examples of sets of synchronization priorities may be possible without deviating from the scope of the present disclosure.

In some examples (e.g., sidelink communications), an S-SSB transmission resource may be excluded from a resource for sidelink messages (e.g., PSSCH and/or PSCCH transmissions for Mode 2). In such examples, semi-static prioritization of S-SSB transmissions may occur by assigning orthogonal resources. In sidelink communications in the unlicensed spectrum, examples may occur where S-SSB transmissions have the same configuration. To mitigate and/or prevent S-SSB transmission from having the same configuration, UEs 115 in a network may maintain system-wise sync. Alternatively, the UEs 115 may not maintain system-wise sync, but groups of UEs 115 may maintain in-sync within the group (e.g., such UEs 115 may not maintain sync across groups). For the latter example, the prioritization of S-SSB transmissions across groups may be undefined. In some such examples, supporting a category 2 LBT-based discovery reference signal (DRS) transmission to be reused for S-SSB transmission may enable S-SSB transmissions to be prioritized. However, prioritization and/or protection according to such methods may not be guaranteed, as LBT failure may occur.

A first UE 115 may communicate with other UEs 115 using sidelink communications. For instance, the first UE 115 may transmit an S-SSB to a second UE 115. Additionally, the first UE 115 may communicate with the other UEs in an unlicensed spectrum. In some such examples, the first UE 115 may be constrained to perform a channel access procedure (e.g., LBT) before transmitting the S-SSB. In some examples, multiple UEs 115 may attempt to transmit in the unlicensed spectrum on a same resource at the same time. However, due to the constraint of performing the channel access procedure before transmitting, some or each but one of the multiple UEs 115 may be unable to transmit on the resource. Thus, methods that enable UEs 115 with higher priority transmissions to be more likely to successfully perform the channel access procedure as compared to UEs 115 with lower priority transmissions may increase the likelihood that higher priority transmissions are communicated in the resource.

The present disclosure may describe methods that enable UEs 115 to prioritize an S-SSB transmission over other transmissions when communicating in the unlicensed spectrum. For instance, the present disclosure may describe methods that enable UEs 115 to prioritize an S-SSB over a PSCCH or PSSCH transmission. In one example, a first resource for transmitting the S-SSB may have a starting time occurring before that of a second resource for transmitting a PSSCH or PSCCH transmission, where the first and second resources overlap in time. Thus, a channel access procedure for the first resource may be successful before a channel access procedure for the second resource. Accordingly, S-SSB transmissions may be prioritized over PSSCH and/or PSCCH transmissions.

Additionally or alternatively, the present disclosure may describe methods that enable UEs 115 to prioritize an S-SSB of a first synchronization priority over an S-SSB of a second synchronization priority. For instance, within a time span for performing a channel access procedure, earlier resources for performing the channel access procedure may be used to access the channel for S-SSBs with a higher synchronization priority, whereas later resources may be used to access the channel for S-SSBs with a lower synchronization priority. Additionally or alternatively, a channel access procedure may have a different energy detection threshold (e.g., a higher threshold) for transmitting S-SSBs with the higher synchronization priority as compared to a channel access procedure for transmitting an S-SSB with a lower synchronization priority.

In some examples, a UE 115 may perform an energy detection threshold adaptation procedure. For instance, a first UE 115 may be configured (e.g., by a base station 105 or a second UE 115) with an energy detection thresholds. In such examples, the configured energy detection threshold may enable the UE 115 to initiate a channel occupancy time (COT) and share information with the base station 105 or the second UE 115. In other examples, the energy detection threshold may be so high that the UE 115 is less likely to perform COT sharing. Additionally or alternatively, a UE 115 accessing a channel on which sidelink transmissions are being performed may set an energy detection threshold to be less than or equal to a maximum energy detection threshold. The maximum energy detection threshold may be determined such that if the UE 115 is configured with a parameter corresponding to a maximum energy detection threshold value, the maximum energy detection threshold may be set to a value of the parameter. Otherwise, the UE 115 may determine the maximum energy detection threshold according to a procedure. For instance, if the UE 115 is configured with an energy detection threshold offset, the maximum energy detection threshold may be set by adjusting the maximum energy detection threshold according to the offset value signaled by energy detection threshold offset. Otherwise, the UE may set the maximum energy detection threshold to a preconfigured value. If a first particular parameter (e.g., a parameter indicating the absence of any other technology) is not configured at the UE 115 and a second particular parameter (e.g., a sidelink COT sharing energy detection threshold) is configured at the UE 115, the base station 105 or the UE 115 may use a transmit power of the base station 105 or the UE 115 in determining the resulting energy detection threshold according to the second particular parameter. For a case where a UE 115 performs channel access procedures for a sidelink transmission and sidelink control information (SCI) (e.g., configured grant SCI) is absent in the sidelink transmission or SCI is present in the sidelink transmission and indicates COT-sharing information other than COT sharing not being available, the maximum energy detection threshold may be set equal to a value provided by the second particular parameter (e.g., the sidelink COT sharing energy detection threshold).

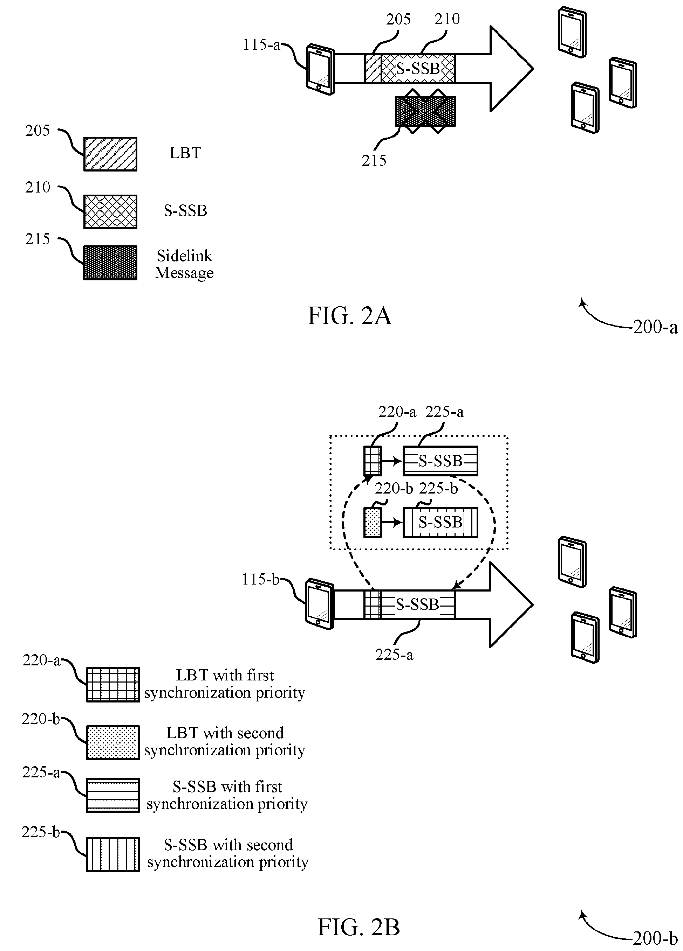

FIG. 2A and 2B illustrate examples of wireless communications systems 200-a and 200-b that support sidelink synchronization signal transmission prioritization in accordance with aspects of the present disclosure. In some examples, wireless communications system 200-a and 200-b may be implemented by one or more aspects of wireless communications system 100. For instance, UEs 115-a and 115-b may be examples of UEs 115 as described with reference to FIG. 1.

With regards to FIG. 2A, UE 115-a identifies, in a radio frequency spectrum band (e.g., an unlicensed spectrum), an S-SSB resource 210 for transmitting an S-SSB and a sidelink message resource 215 for transmitting a sidelink message (e.g., a PSSCH or PSCCH transmission). The S-SSB resource 210 overlaps in time with the sidelink message resource 215 and a starting time of the S-SSB resource 210 occurs before a starting time of the sidelink message resource 215. In some examples, UE 115-a may receive an indication of the S-SSB resource 210 and the sidelink message resource 215. In some examples, the S-SSB resource 210 and the sidelink message resource 215 overlaps in frequency. In some examples, the sidelink message may be a sidelink shared channel transmission (e.g., a PSSCH transmission) or a sidelink control channel transmission (e.g., a PSCCH transmission).

UE 115-a performs a channel access procedure (e.g., LBT) for the radio frequency spectrum band (e.g., the unlicensed spectrum) for the S-SSB resource 210 (e.g., on channel access interval 205). UE 115-a performs the channel access procedure based on an S-SSB associated with the S-SSB resource 210 being prioritized (e.g., having a higher priority) over a sidelink message associated with the sidelink message resource 215. In some examples, UE 115-a may perform the channel access procedure before a starting time of the S-SSB resource 210. In some such examples, UE 115-a may transmit a cyclic prefix extension generated from the S-SSB to be transmitted over the S-SSB resource 210 for a time span from the channel access procedure to the starting time. Additionally, UE 115-a may transmit the cyclic prefix based on the starting time of the S-SSB resource 210 being unaligned with a boundary of a symbol.

UE 115-a may transmit an S-SSB on the S-SSB resource 210 based on the channel access procedure indicating that the radio frequency spectrum band is available for transmission. Additionally, UE 115-a may refrain from transmitting the sidelink message of the sidelink message resource 215 based on the starting time of the S-SSB resource 210 occurring before the starting time of the sidelink message resource 215.

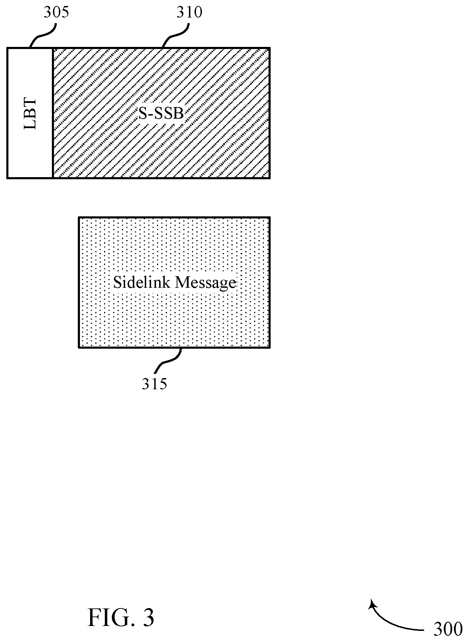

In some examples, UE 115-a may transmit the S-SSB on the S-SSB resource 210 during a first time interval. In some such examples, UE 115-a may perform, during a second time interval, a second channel access procedure (e.g., LBT) for the radio frequency spectrum band (e.g., the unlicensed spectrum) during at least a first portion of the S-SSB resource 210 for the S-SSB that is before the sidelink message resource 215. UE 115-a may perform the second channel access procedure in this manner based on the S-SSB being prioritized over the sidelink message. Additionally, UE 115-a may transmit the sidelink message on the second resource during the second time interval based on the second channel access procedure indicating that the radio frequency spectrum band is available for transmission. Additional details of prioritizing an S-SSB resource over a sidelink message resource may be described herein, for instance, with reference to FIG. 3.

With regards to FIG. 2B, UE 115-b identifies a time resource (e.g., time resource 218) in a radio frequency spectrum band (e.g., the unlicensed spectrum) for performing a channel access procedure (e.g., LBT). In some such examples, a first value of a parameter for the channel access procedure is associated with a first synchronization priority and a second value of the parameter for the time resource is associated with a second synchronization priority.

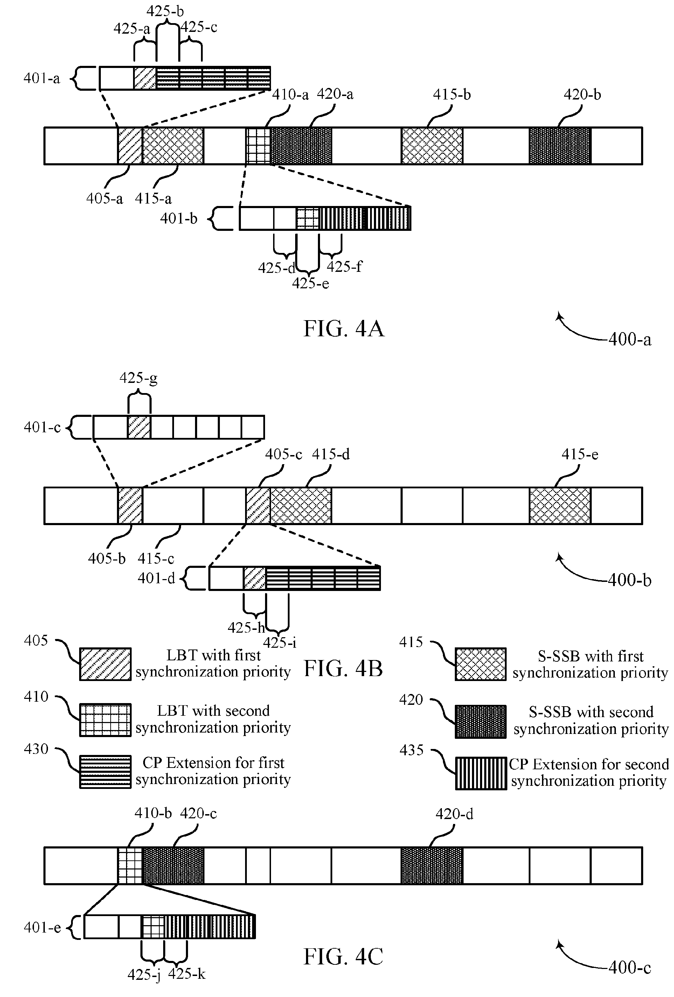

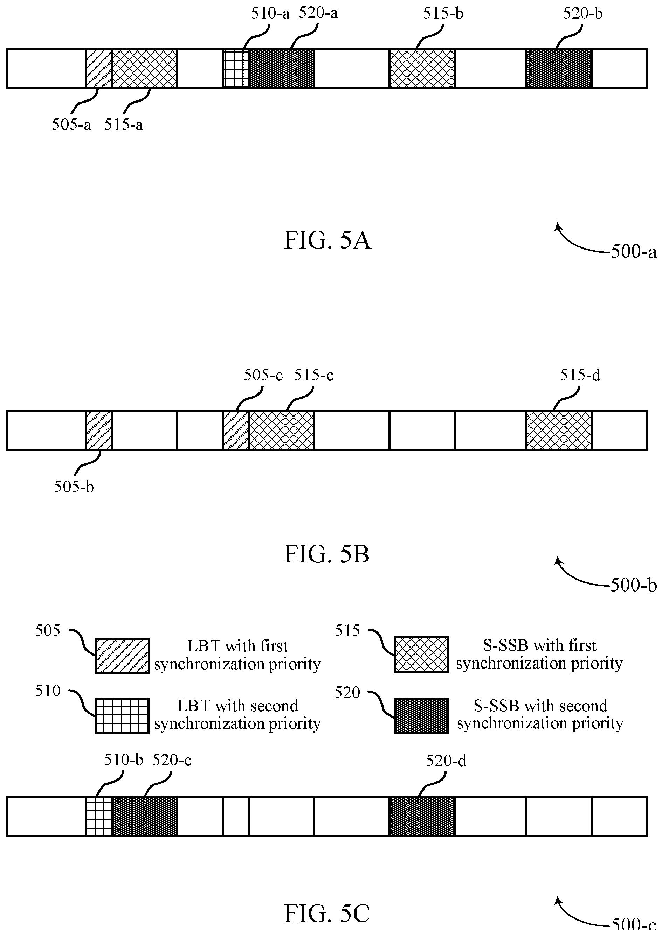

In some examples, the first value of the parameter may correspond to a first interval in the time resource 218 for performing the channel access procedure and the second value of the parameter may correspond to a second interval in the time resource 218 for performing the channel access procedure. Additional details of these techniques may be described herein, for instance, with reference to FIGs. 4A, 4B, and 4C. Additionally or alternatively, the first value of the parameter may correspond to a first energy detection threshold for the channel access procedure and the second value of the parameter may correspond to a second energy detection threshold. Additional details of this scheme may be described herein, for instance, with reference to FIGs. 5A, 5B, and 5C. In some examples, the first synchronization priority may be associated with UE 115-b being directly synchronized with a base station (e.g., a base station 105) or a GNSS and the second synchronization priority may be associated with UE 115-b being synchronized with the base station or the GNSS via a second UE 115. In some examples, UE 115-b may receive an indication of the first and second values of the parameter.

UE 115-b may perform the channel access procedure for the time resource 218 in accordance with the first value of the parameter based on UE 115-b being associated with the first synchronization priority. For instance, LBT procedure 220-a may be associated with the first synchronization priority and/or the first value of the parameter and LBT procedure 220-b may be associated with the second synchronization priority and/or the second value of the priority. Accordingly, in the present example, UE 115-b may perform LBT procedure 220-a.

UE 115-b may transmit a S-SSB associated with the first synchronization priority based on the channel access procedure based on the channel access procedure (e.g., in accordance with the first value of the parameter) indicating that the radio frequency spectrum band is available for transmission. For instance, in the present example, UE 115-b may be associated with LBT procedure 220-a and may, accordingly, transmit S-SSB 225-a. However, UEs associated with LBT procedure 220-b may transmit S-SSB 225-b. In some examples, transmitting the S-SSB may be based on receiving the indication of the first and second values of the parameter. Additionally or alternatively, transmitting the S-SSB of the first synchronization priority may be based on the first interval occurring before the second interval. Additionally or alternatively, transmitting the S-SSB of the first synchronization priority may be based on the first energy detection threshold being different from (e.g., higher than) the second energy detection threshold.

In some examples, the methods described herein may be associated with one or more advantages. For instance, prioritizing S-SSB transmissions over sidelink message transmissions may increase a likelihood that a UE successfully performs a channel access procedure for transmitting S-SSB transmissions. Additionally or alternatively, prioritizing S-SSB transmissions with a higher synchronization priority over S-SSB transmissions with a lower synchronization priority may increase a likelihood that a UE receives an S-SSB transmission associated with the higher synchronization priority. Thus, the UE may be able to perform synchronization more accurately as compared to an example in which the UE receives an S-SSB transmission associated with the lower synchronization priority.

FIG. 3 illustrates an example of a communications prioritization scheme 300 that supports sidelink synchronization signal transmission prioritization in accordance with aspects of the present disclosure. In some examples, communications prioritization scheme may implement one or more aspects of wireless communications system 200-a. For instance, channel access interval 305 may be an example of a channel access interval 205 as described with reference to FIG. 2A; S-SSB resource 310 may be an example of an S-SSB resource 210 as described with reference to FIG. 2A; and sidelink message resource 315 may be an example of a sidelink message resource 215 as described with reference to FIG. 2A.

In some examples, a UE 115 may use a contention slot configured for data transmission for S-SSB transmission, where the UE 115 gives a higher priority to the S-SSB transmission. In some examples, the UE 115 may use the contention slot in this manner for S-SSB resource configuration when system-wise sync is present and/or for S-SSB resource configuration for a same group of UEs 115 when the group has in-sync. In some such examples, a resource pool may be configured for S-SSB resources (e.g., S-SSB resource 310) that may overlap with a resource pool for sidelink messages (e.g., sidelink message resource 315). Additionally, the UE may perform a channel access procedure (e.g., LBT) before S-SSB transmission (e.g., during channel access interval 305 before S-SSB resource 310) and may start the S-SSB transmission after LBT passes. To prioritize transmission of the S-SSB, the transmission starting position for the S-SSB (e.g., the starting location of S-SSB resource 310) may start earlier than the transmission starting position for the sidelink message (e.g., the starting location of sidelink message resource 315). If the starting position for S-SSB transmission is not aligned with a symbol boundary, a cyclic-prefix extension may be used to fill the gap between the end of a channel access interval 305 (e.g., an LBT sensing slot) and the start of S-SSB resource 310. As depicted, S-SSB resource 310 and/or sidelink message resource 315 may include a cyclic-prefix extension. In some examples, this method of prioritizing S-SSB transmissions over sidelink message transmissions may be employed when a UE 115 fails to identify a known or determined position of an S-SSB transmission due to performing a channel access procedure in an unlicensed band.

**FIGs. 4A, 4B, and 4C** illustrate examples of synchronization signal block prioritization schemes 400-a, 400-b, and 400-c that support sidelink synchronization signal transmission prioritization in accordance with aspects of the present disclosure. For sidelink communications in the unlicensed spectrum, a channel access procedure may be performed by a UE (e.g., a UE 115, a UE 115-b) before the UE transmits an S-SSB. For an unlicensed band, giving higher channel access priority to a UE configured to transmit an S-SSB associated with a higher synchronization priority may increase a likelihood that the UE configured to transmit the S-SSB of the higher synchronization priority may pass the channel access procedure as compared to UEs configured to transmit S-SSBs of a lower synchronization priority. In order to achieve this scheme, different starting points may be configured for S-SSBs.

For instance, with regards to FIG. 4A, two candidate S-SSB resources (e.g., S-SSB resource 415-a and S-SSB resource 420-a) may be configured for transmitting a first S-SSB (e.g., S-SSB0). For example, a first UE may transmit the first S-SSB with a first starting point. During a first interval 425-a of a first time resource 401-a, a first UE may perform and pass a channel access procedure. Accordingly, during the following intervals of first time resource 401-a (e.g., intervals including second interval 425-b and third interval 425-c), the first UE may transmit a CP extension 430 before first S-SSB resource 415-a (e.g., to fill the gap between first interval 425-a and S-SSB resource 415-a). The first UE may transmit the first S-SSB in first S-SSB resource 415-a.

Additionally, a second UE may transmit the first S-SSB with a second starting point. For example, during a first interval 425-d of a second time resource 401-b, a second UE may refrain from performing the channel access procedure for transmitting a second S-SSB. The second UE may refrain from performing the channel access procedure during the first interval 425-d because the second UE may be associated with a lower synchronization priority than the first UE. However, during a second interval 425-e of the second time resource 401-b, the second UE may perform and pass a channel access procedure. Accordingly, during the following intervals of second time resource 401-b (e.g., intervals including third time interval 425-f), the second UE may transmit a CP extension 435 to fill the gap between an end of the second interval 425-e and the beginning of the second S-SSB resource 420-a. The second UE may transmit the S-SSB in the second S-SSB resource 420-a.

First interval 425-a may have a starting location relative to first time resource 401-a that starts before second interval 425-e relative to second time resource 401-b. Accordingly, the first UE may perform the channel access procedure relative to first time resource 401-a before the second UE performs the channel access procedure relative to second time resource 401-b. Similarly, second interval 425-b may have a starting location relative to first time resource 401-a that starts before third interval 425-f relative to third time resource 401-b. Accordingly, the first UE may transmit a first S-SSB relative to first time resource 401-a before the second UE transmits a second S-SSB relative to second time resource 401-b. The first UE may perform a channel access procedure and/or transmit an S-SSB relative to first time resource 401-a before the second UE performs a channel access procedure and/or transmits an S-SSB because the first UE may be associated with a higher synchronization priority than the second UE. In some examples, the first UE may transmit a third S-SSB over S-SSB resource 415-b and the second UE may transmit a fourth S-SSB over S-SSB resource 420-b.

With regards to FIG. 4B, two candidate S-SSB resources may be configured for transmitting a first S-SSB (e.g., S-SSB0). For instance, the two candidate resources may be S-SSB resource 415-c and S-SSB resource 415-d. A first UE may transmit the S-SSB with a first starting point. For instance, during a first interval 425-g of first time resource 401-c, a first UE may fail to pass a channel access procedure (e.g., LBT). Accordingly, the first UE may refrain from transmitting the S-SSB during the S-SSB resource 415-c.

During a first interval 425-h of a second time resource 401-d, the first UE may perform and pass the channel access procedure (e.g., LBT). Accordingly, during the following intervals, the first UE may transmit CP extension 430 between first interval 425-h and S-SSB resource 420-d. Accordingly, the first UE may transmit the S-SSB in the S-SSB resource 415-d. Additionally, the first UE may transmit an S-SSB in S-SSB resource 415-e.

With regards to FIG. 4C, during a first interval 425-j of a first time resource 401-e, a first UE may perform and pass a channel access procedure. Accordingly, during the following intervals of time resource 401-e (e.g., second interval 425-k) the first UE may transmit a CP extension 435 and may transmit a first S-SSB (e.g., S-SSB0) in S-SSB resource 420-c.

In some examples (e.g., FIG. 4A), if a first UE transmits a first S-SSB with a first synchronization priority and LBT is successful for the first S-SSB resource, the first UE may transmit the S-SSB with the first synchronization priority in the first S-SSB resource. A second S-SSB with a second synchronization priority may be transmitted in a second S-SSB resource if LBT passes. In some examples (e.g., FIG. 4B), if a first UE transmits S-SSB with a first synchronization priority but LBT fails for a first S-SSB resource, the first UE may continue to perform LBT for a second S-SSB resource and may transmit the S-SSB with the first synchronization priority in the second S-SSB resource based on passing LBT. In some examples (e.g., FIG. 4C), if a first UE does not transmit an S-SSB with a first synchronization priority but a second UE transmits an S-SSB with a second synchronization priority, the second UE may transmit the S-SSB with the second synchronization priority in the first S-SSB resource or the second S-SSB resource based on passing LBT. In such examples, the first synchronization priority may correspond to a higher synchronization priority and the second synchronization priority may correspond to a lower synchronization priority. In some examples, multiple candidate S-SSB resources may be configured for each S-SSB. Additionally or alternatively, each starting point (e.g., starting location, starting position) may be configured for an S-SSB with a higher synchronization priority (e.g., relative to S-SSBs with a lower synchronization priority).

FIGs. 5A, **5B,** and 5C illustrate examples of synchronization signal block prioritization schemes 500-a, 500-b, and 500-c that support sidelink synchronization signal transmission prioritization in accordance with aspects of the present disclosure.

For sidelink communications in the unlicensed spectrum, a channel access procedure may be performed by a UE (e.g., a UE 115, a UE 115-b) before the UE transmits an S-SSB. For an unlicensed band, giving higher channel access priority to a UE configured to transmit an S-SSB associated with a higher synchronization priority may increase a likelihood that the UE configured to transmit the S-SSB of the higher synchronization priority may pass the channel access procedure as compared to UEs configured to transmit S-SSBs of a lower synchronization priority. In order to achieve this scheme, different LBT thresholds (e.g., energy detection thresholds) may be configured for S-SSB with different synchronization priorities.

For instance, with regards to FIG. 5A, a first LBT threshold may be configured for channel access resource 505-a that is associated with a first synchronization priority. A first UE may pass LBT during the channel access resource 505-a according to the first LBT threshold and may transmit a first S-SSB associated with the first synchronization priority over S-SSB-resource 515-a. Similarly, a second LBT threshold may be configured for channel access resource 510-a that is associated with a second synchronization priority. A second UE may pass LBT during the channel access resource 510-a and may transmit a second S-SSB associated with the second synchronization priority over S-SSB resource 520-a. In some examples, the first UE may transmit a third S-SSB over S-SSB resource 515-b and the second UE may transmit a fourth S-SSB over S-SSB resource 520-b. In some examples, the first LBT threshold may be higher than the second LBT threshold.

With regards to FIG. 5B, a first LBT threshold may be configured for channel access resource 505-b that is associated with a first synchronization priority. A first UE may fail to pass LBT during the channel access resource 505-b according to the first LBT threshold and may refrain from transmitting an S-SSB. However, during channel access resource 505-c, the first UE may pass LBT according to the first LBT threshold and may transmit the S-SSB associated with the first synchronization priority over S-SSB resource 515-c. In some examples, the first UE may transmit a second S-SSB over S-SSB resource 515-d.

With regards to FIG. 5C, an LBT threshold may be configured for channel access resource 510-b that is associated with the second synchronization priority. A first UE may pass LBT during channel access resource 510-b and may transmit an S-SSB associated with the second synchronization priority over S-SSB resource 520-c. In some examples, the first UE may transmit a second S-SSB over S-SSB resource 520-d.

In some examples (e.g., FIG. 5A), if a first UE transmits an S-SSB with a first synchronization priority and LBT is successful for the first S-SSB resource based on the energy detection threshold, the first UE may transmit an S-SSB with the first synchronization priority in the first S-SSB resource. A second S-SSB with a second synchronization priority may be transmitted in the second S-SSB resource if LBT passes based on the second energy detection threshold. In some examples (e.g., FIG. 5B), a first UE may transmit S-SSB with a first synchronization priority, but LBT may fail for the first S-SSB resource based on the first energy detection threshold. In such examples, the UE may continue to perform LBT for the second S-SSB resource based on the first energy detection threshold and may transmit the S-SSB with the first synchronization priority in the second S-SSB resource based on passing LBT. In some examples (e.g., FIG. 5C), a first UE may not transmit an S-SSB with a first synchronization priority, but a second UE may transmit an S-SSB with a second synchronization priority. In such examples, the second UE may transmit the S-SSB with the second synchronization priority in the first S-SSB resource or the second S-SSB resource based on passing LBT, where LBT may be performed based on the second energy detection threshold. In some examples, a higher energy detection threshold may be configured for S-SSBs with a higher synchronization priority.

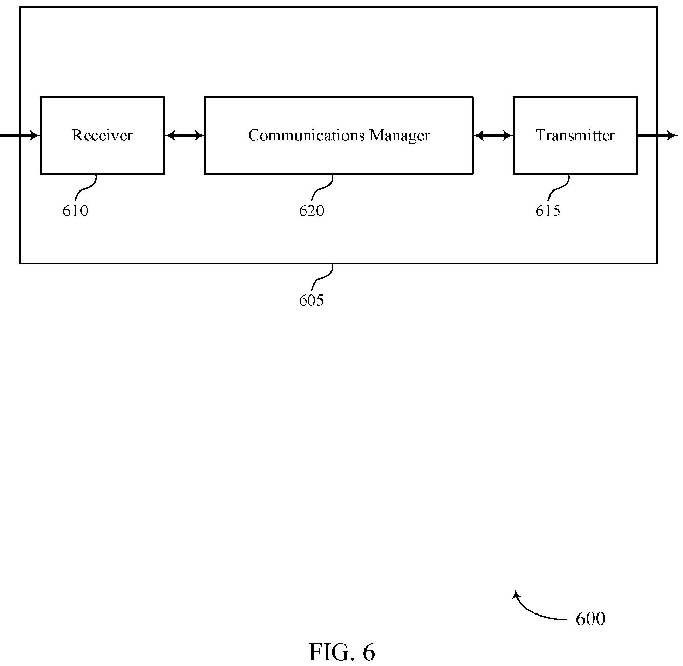

FIG. 6 shows a block diagram 600 of a device 605 that supports sidelink synchronization signal transmission prioritization in accordance with aspects of the present disclosure. The device 605 may be an example of aspects of a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to sidelink synchronization signal transmission prioritization). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to sidelink synchronization signal transmission prioritization). In some examples, the transmitter 615 may be co-located with a receiver 610 in a transceiver module. The transmitter 615 may utilize a single antenna or a set of multiple antennas.

The communications manager 620, the receiver 610, the transmitter 615, or various combinations thereof or various components thereof may be examples of means for performing various aspects of sidelink synchronization signal transmission prioritization as described herein. For example, the communications manager 620, the receiver 610, the transmitter 615, or various combinations or components thereof may support a method for performing one or more of the functions described herein.

In some examples, the communications manager 620, the receiver 610, the transmitter 615, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 620, the receiver 610, the transmitter 615, or various combinations or components thereof may be implemented in code (e.g., as communications management software or firmware) executed by a processor. If implemented in code executed by a processor, the functions of the communications manager 620, the receiver 610, the transmitter 615, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 620 may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

The communications manager 620 may support wireless communication at a UE in accordance with examples as disclosed herein. For example, the communications manager 620 may be configured as or otherwise support a means for identifying, in a radio frequency spectrum band, a first resource for a sidelink synchronization signal block and a second resource for a sidelink message, the first resource overlapping in time with the second resource, and a first starting time of the first resource occurring before a second starting time of the second resource. The communications manager 620 may be configured as or otherwise support a means for performing a channel access procedure for the radio frequency spectrum band for the first resource for the sidelink synchronization signal block based on the sidelink synchronization signal block being prioritized over the sidelink message. The communications manager 620 may be configured as or otherwise support a means for transmitting the sidelink synchronization signal block on the first resource based on the channel access procedure indicating that the radio frequency spectrum band is available for transmission.

Additionally or alternatively, the communications manager 620 may support wireless communication at a UE in accordance with examples as disclosed herein. For example, the communications manager 620 may be configured as or otherwise support a means for identifying a time resource in a radio frequency spectrum band for performing a channel access procedure, where a first value of a parameter for the channel access procedure is associated with a first synchronization priority and a second value of the parameter for the time resource is associated with a second synchronization priority. The communications manager 620 may be configured as or otherwise support a means for performing the channel access procedure for the time resource in accordance with the first value of the parameter based on the UE being associated with the first synchronization priority. The communications manager 620 may be configured as or otherwise support a means for transmitting a sidelink synchronization signal block associated with the first synchronization priority based on the channel access procedure in accordance with the first value of the parameter indicating that the radio frequency spectrum band is available for transmission.

By including or configuring the communications manager 620 in accordance with examples as described herein, the device 605 (e.g., a processor controlling or otherwise coupled to the receiver 610, the transmitter 615, the communications manager 620, or a combination thereof) may support techniques for prioritizing S-SSB transmissions over other transmissions (e.g., sidelink messages or S-SSB transmissions of a lower synchronization priority). Prioritizing the S-SSB transmissions over the other transmissions may ensure that a UE is more likely to receive an S-SSB during a given duration of time and/or that the UE may receive a higher priority S-SSB.

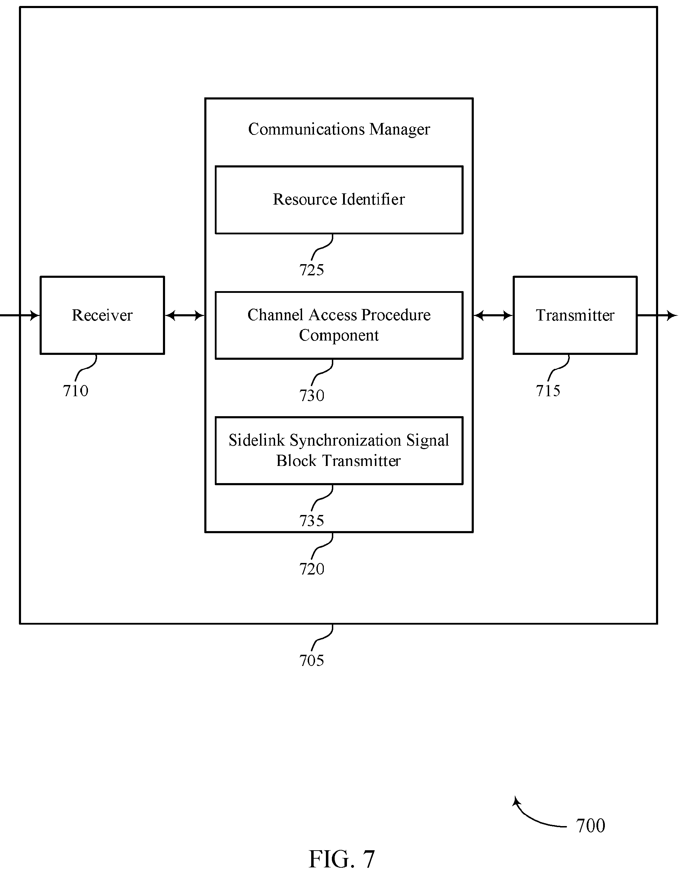

FIG. 7 shows a block diagram 700 of a device 705 that supports sidelink synchronization signal transmission prioritization in accordance with aspects of the present disclosure. The device 705 may be an example of aspects of a device 605 or a UE 115 as described herein. The device 705 may include a receiver 710, a transmitter 715, and a communications manager 720. The device 705 may also include a processor. Each of these components may be in communication with one another (e.g., via one or more buses).

The receiver 710 may provide a means for receiving information such as packets, user data, control information, or any combination thereof associated with various information channels (e.g., control channels, data channels, information channels related to sidelink synchronization signal transmission prioritization). Information may be passed on to other components of the device 705. The receiver 710 may utilize a single antenna or a set of multiple antennas.

The transmitter 715 may provide a means for transmitting signals generated by other components of the device 705. For example, the transmitter 715 may transmit information such as packets, user data, control information, or any combination thereof associated with various information channels (e.g., control channels, data channels, information channels related to sidelink synchronization signal transmission prioritization). In some examples, the transmitter 715 may be co-located with a receiver 710 in a transceiver module. The transmitter 715 may utilize a single antenna or a set of multiple antennas.

The device 705, or various components thereof, may be an example of means for performing various aspects of sidelink synchronization signal transmission prioritization as described herein. For example, the communications manager 720 may include a resource identifier 725, a channel access procedure component 730, a sidelink synchronization signal block transmitter 735, or any combination thereof. The communications manager 720 may be an example of aspects of a communications manager 620 as described herein. In some examples, the communications manager 720, or various components thereof, may be configured to perform various operations (e.g., receiving, monitoring, transmitting) using or otherwise in cooperation with the receiver 710, the transmitter 715, or both. For example, the communications manager 720 may receive information from the receiver 710, send information to the transmitter 715, or be integrated in combination with the receiver 710, the transmitter 715, or both to receive information, transmit information, or perform various other operations as described herein.

The communications manager 720 may support wireless communication at a UE in accordance with examples as disclosed herein. The resource identifier 725 may be configured as or otherwise support a means for identifying, in a radio frequency spectrum band, a first resource for a sidelink synchronization signal block and a second resource for a sidelink message, the first resource overlapping in time with the second resource, and a first starting time of the first resource occurring before a second starting time of the second resource. The channel access procedure component 730 may be configured as or otherwise support a means for performing a channel access procedure for the radio frequency spectrum band for the first resource for the sidelink synchronization signal block based on the sidelink synchronization signal block being prioritized over the sidelink message. The sidelink synchronization signal block transmitter 735 may be configured as or otherwise support a means for transmitting the sidelink synchronization signal block on the first resource based on the channel access procedure indicating that the radio frequency spectrum band is available for transmission.

Additionally or alternatively, the communications manager 720 may support wireless communication at a UE in accordance with examples as disclosed herein. The resource identifier 725 may be configured as or otherwise support a means for identifying a time resource in a radio frequency spectrum band for performing a channel access procedure, where a first value of a parameter for the channel access procedure is associated with a first synchronization priority and a second value of the parameter for the time resource is associated with a second synchronization priority. The channel access procedure component 730 may be configured as or otherwise support a means for performing the channel access procedure for the time resource in accordance with the first value of the parameter based on the UE being associated with the first synchronization priority. The sidelink synchronization signal block transmitter 735 may be configured as or otherwise support a means for transmitting a sidelink synchronization signal block associated with the first synchronization priority based on the channel access procedure in accordance with the first value of the parameter indicating that the radio frequency spectrum band is available for transmission.

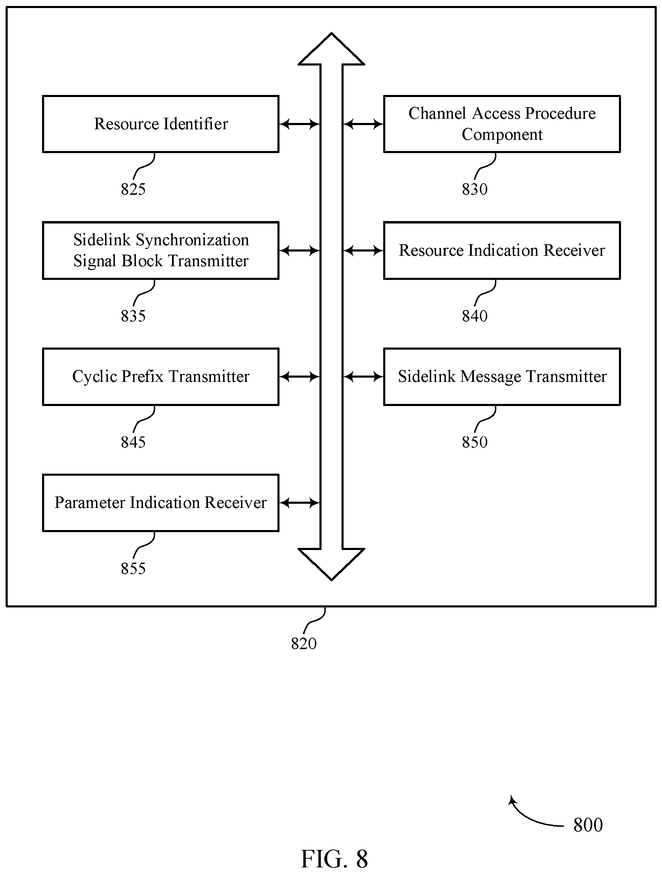

FIG. 8 shows a block diagram 800 of a communications manager 820 that supports sidelink synchronization signal transmission prioritization in accordance with aspects of the present disclosure. The communications manager 820 may be an example of aspects of a communications manager 620, a communications manager 720, or both, as described herein. The communications manager 820, or various components thereof, may be an example of means for performing various aspects of sidelink synchronization signal transmission prioritization as described herein. For example, the communications manager 820 may include a resource identifier 825, a channel access procedure component 830, a sidelink synchronization signal block transmitter 835, a resource indication receiver 840, a cyclic prefix transmitter 845, a sidelink message transmitter 850, a parameter indication receiver 855, or any combination thereof. Each of these components may communicate, directly or indirectly, with one another (e.g., via one or more buses).

The communications manager 820 may support wireless communication at a UE in accordance with examples as disclosed herein. The resource identifier 825 may be configured as or otherwise support a means for identifying, in a radio frequency spectrum band, a first resource for a sidelink synchronization signal block and a second resource for a sidelink message, the first resource overlapping in time with the second resource, and a first starting time of the first resource occurring before a second starting time of the second resource. The channel access procedure component 830 may be configured as or otherwise support a means for performing a channel access procedure for the radio frequency spectrum band for the first resource for the sidelink synchronization signal block based on the sidelink synchronization signal block being prioritized over the sidelink message. The sidelink synchronization signal block transmitter 835 may be configured as or otherwise support a means for transmitting the sidelink synchronization signal block on the first resource based on the channel access procedure indicating that the radio frequency spectrum band is available for transmission.

In some examples, the resource indication receiver 840 may be configured as or otherwise support a means for receiving an indication of the first resource and the second resource, where identifying the first resource and the second resource is based on receiving the indication of the first resource and the second resource.

In some examples, the channel access procedure component 830 may be configured as or otherwise support a means for performing the channel access procedure before the first starting time of the first resource. In some examples, the cyclic prefix transmitter 845 may be configured as or otherwise support a means for transmitting a cyclic prefix extension generated from the sidelink synchronization signal block for a time span from the channel access procedure to the first starting time.

In some examples, transmitting the cyclic prefix for the time span is based on the first starting time of the first resource being unaligned with a boundary of a symbol.

In some examples, the sidelink message transmitter 850 may be configured as or otherwise support a means for refraining from transmitting the sidelink message over the second resource based on the first starting time occurring before the second starting time.

In some examples, the sidelink message includes a sidelink shared channel transmission or a sidelink control channel transmission.

In some examples, the first resource and the second resource overlap in frequency.

In some examples, the sidelink synchronization signal block is transmitted on the first resource during a first time interval, and the channel access procedure component 830 may be configured as or otherwise support a means for performing, during a second time interval, a second channel access procedure for the radio frequency spectrum band during at least a first portion of the first resource for the sidelink synchronization signal block that is before the second resource based on the sidelink synchronization signal block being prioritized over the sidelink message. In some examples, the sidelink synchronization signal block is transmitted on the first resource during a first time interval, and the sidelink message transmitter 850 may be configured as or otherwise support a means for transmitting the sidelink message on the second resource during the second time interval based on the second channel access procedure indicating that the radio frequency spectrum band is available for transmission.

Additionally or alternatively, the communications manager 820 may support wireless communication at a UE in accordance with examples as disclosed herein. In some examples, the resource identifier 825 may be configured as or otherwise support a means for identifying a time resource in a radio frequency spectrum band for performing a channel access procedure, where a first value of a parameter for the channel access procedure is associated with a first synchronization priority and a second value of the parameter for the time resource is associated with a second synchronization priority. In some examples, the channel access procedure component 830 may be configured as or otherwise support a means for performing the channel access procedure for the time resource in accordance with the first value of the parameter based on the UE being associated with the first synchronization priority. In some examples, the sidelink synchronization signal block transmitter 835 may be configured as or otherwise support a means for transmitting a sidelink synchronization signal block associated with the first synchronization priority based on the channel access procedure in accordance with the first value of the parameter indicating that the radio frequency spectrum band is available for transmission.

In some examples, the parameter indication receiver 855 may be configured as or otherwise support a means for receiving an indication of the first value of the parameter and the second value of the parameter, where transmitting the sidelink synchronization signal block is based on receiving the indication.

In some examples, the first value of the parameter corresponds to a first interval in the time resource for performing the channel access procedure and the second value of the parameter corresponds to a second interval in the time resource for performing the channel access procedure.

In some examples, transmitting the sidelink synchronization signal block of the first synchronization priority is based on the first interval occurring before the second interval.

In some examples, the first value of the parameter corresponds to a first energy detection threshold for the channel access procedure and the second value of the parameter corresponds to a second energy detection threshold.

In some examples, transmitting the sidelink synchronization signal block of the first synchronization priority is based on the first energy detection threshold being higher than the second energy detection threshold.

In some examples, the first synchronization priority and the second synchronization priority are each associated with a different synchronization source of a plurality of synchronization sources, the first synchronization priority being higher than the second synchronization priority.

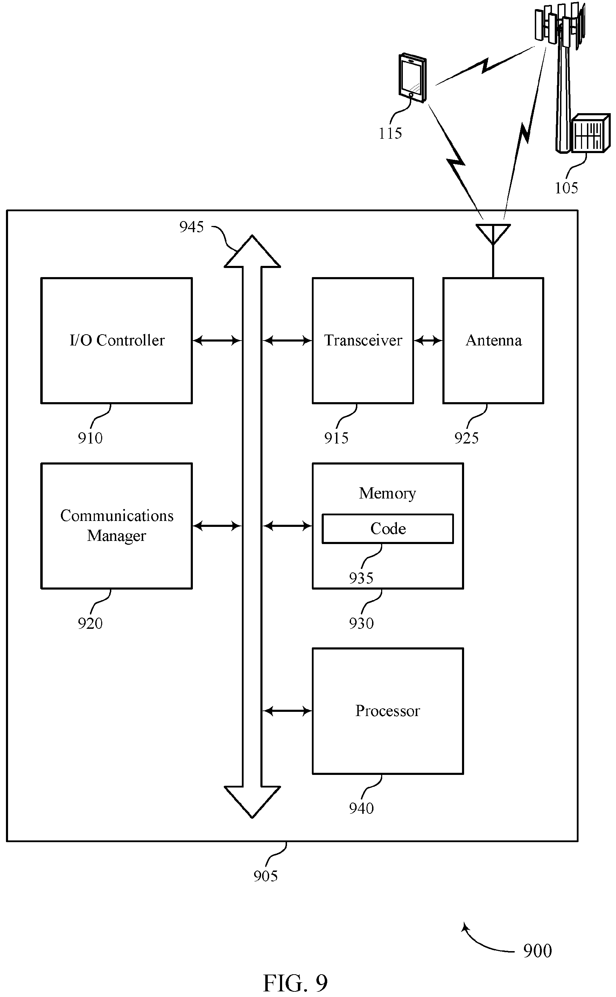

FIG. 9 shows a diagram of a system 900 including a device 905 that supports sidelink synchronization signal transmission prioritization in accordance with aspects of the present disclosure. The device 905 may be an example of or include the components of a device 605, a device 705, or a UE 115 as described herein. The device 905 may communicate wirelessly with one or more base stations 105, UEs 115, or any combination thereof. The device 905 may include components for bi-directional voice and data communications including components for transmitting and receiving communications, such as a communications manager 920, an input/output (I/O) controller 910, a transceiver 915, an antenna 925, a memory 930, code 935, and a processor 940. These components may be in electronic communication or otherwise coupled (e.g., operatively, communicatively, functionally, electronically, electrically) via one or more buses (e.g., a bus 945).

The I/O controller 910 may manage input and output signals for the device 905. The I/O controller 910 may also manage peripherals not integrated into the device 905. In some cases, the I/O controller 910 may represent a physical connection or port to an external peripheral. In some cases, the I/O controller 910 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 910 may represent or interact with a modem, a keyboard, a mouse, a touchscreen, or a similar device. In some cases, the I/O controller 910 may be implemented as part of a processor, such as the processor 940. In some cases, a user may interact with the device 905 via the I/O controller 910 or via hardware components controlled by the I/O controller 910.

In some cases, the device 905 may include a single antenna 925. However, in some other cases, the device 905 may have more than one antenna 925, which may be capable of concurrently transmitting or receiving multiple wireless transmissions. The transceiver 915 may communicate bi-directionally, via the one or more antennas 925, wired, or wireless links as described herein. For example, the transceiver 915 may represent a wireless transceiver and may communicate bi-directionally with another wireless transceiver. The transceiver 915 may also include a modem to modulate the packets, to provide the modulated packets to one or more antennas 925 for transmission, and to demodulate packets received from the one or more antennas 925. The transceiver 915, or the transceiver 915 and one or more antennas 925, may be an example of a transmitter 615, a transmitter 715, a receiver 610, a receiver 710, or any combination thereof or component thereof, as described herein.

The memory 930 may include random access memory (RAM) and read-only memory (ROM). The memory 930 may store computer-readable, computer-executable code 935 including instructions that, when executed by the processor 940, cause the device 905 to perform various functions described herein. The code 935 may be stored in a non-transitory computer-readable medium such as system memory or another type of memory. In some cases, the code 935 may not be directly executable by the processor 940 but may cause a computer (e.g., when compiled and executed) to perform functions described herein. In some cases, the memory 930 may contain, among other things, a basic I/O system (BIOS) which may control basic hardware or software operation such as the interaction with peripheral components or devices.

The processor 940 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 940 may be configured to operate a memory array using a memory controller. In some other cases, a memory controller may be integrated into the processor 940. The processor 940 may be configured to execute computer-readable instructions stored in a memory (e.g., the memory 930) to cause the device 905 to perform various functions (e.g., functions or tasks supporting sidelink synchronization signal transmission prioritization). For example, the device 905 or a component of the device 905 may include a processor 940 and memory 930 coupled to the processor 940, the processor 940 and memory 930 configured to perform various functions described herein.

The communications manager 920 may support wireless communication at a UE in accordance with examples as disclosed herein. For example, the communications manager 920 may be configured as or otherwise support a means for identifying, in a radio frequency spectrum band, a first resource for a sidelink synchronization signal block and a second resource for a sidelink message, the first resource overlapping in time with the second resource, and a first starting time of the first resource occurring before a second starting time of the second resource. The communications manager 920 may be configured as or otherwise support a means for performing a channel access procedure for the radio frequency spectrum band for the first resource for the sidelink synchronization signal block based on the sidelink synchronization signal block being prioritized over the sidelink message. The communications manager 920 may be configured as or otherwise support a means for transmitting the sidelink synchronization signal block on the first resource based on the channel access procedure indicating that the radio frequency spectrum band is available for transmission.

Additionally or alternatively, the communications manager 920 may support wireless communication at a UE in accordance with examples as disclosed herein. For example, the communications manager 920 may be configured as or otherwise support a means for identifying a time resource in a radio frequency spectrum band for performing a channel access procedure, where a first value of a parameter for the channel access procedure is associated with a first synchronization priority and a second value of the parameter for the time resource is associated with a second synchronization priority. The communications manager 920 may be configured as or otherwise support a means for performing the channel access procedure for the time resource in accordance with the first value of the parameter based on the UE being associated with the first synchronization priority. The communications manager 920 may be configured as or otherwise support a means for transmitting a sidelink synchronization signal block associated with the first synchronization priority based on the channel access procedure in accordance with the first value of the parameter indicating that the radio frequency spectrum band is available for transmission.

By including or configuring the communications manager 920 in accordance with examples as described herein, the device 905 may support techniques for prioritizing S-SSB transmissions over other transmissions (e.g., sidelink messages or S-SSB transmissions of a lower synchronization priority). Prioritizing the S-SSB transmissions over the other transmissions may ensure that a UE is more likely to receive an S-SSB during a given duration of time and/or that the UE may receive a higher priority S-SSB.

In some examples, the communications manager 920 may be configured to perform various operations (e.g., receiving, monitoring, transmitting) using or otherwise in cooperation with the transceiver 915, the one or more antennas 925, or any combination thereof. Although the communications manager 920 is illustrated as a separate component, in some examples, one or more functions described with reference to the communications manager 920 may be supported by or performed by the processor 940, the memory 930, the code 935, or any combination thereof. For example, the code 935 may include instructions executable by the processor 940 to cause the device 905 to perform various aspects of sidelink synchronization signal transmission prioritization as described herein, or the processor 940 and the memory 930 may be otherwise configured to perform or support such operations.

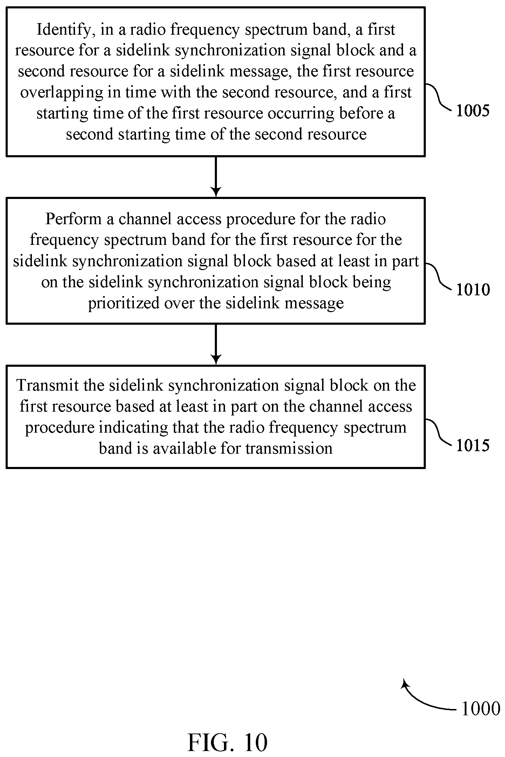

FIG. 10 shows a flowchart illustrating a method 1000 that supports sidelink synchronization signal transmission prioritization in accordance with aspects of the present disclosure. The operations of the method 1000 are implemented by a UE or its components as described herein. For example, the operations of the method 1000 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1005, the method includes identifying, in a radio frequency spectrum band, a first resource for a sidelink synchronization signal block and a second resource for a sidelink message, the first resource overlapping in time with the second resource, and a first starting time of the first resource occurring before a second starting time of the second resource. The operations of 1005 may be performed in accordance with examples as disclosed herein. In some examples, aspects of the operations of 1005 may be performed by a resource identifier 825 as described with reference to FIG. 8.

At 1010, the method includes performing a channel access procedure for the radio frequency spectrum band for the first resource for the sidelink synchronization signal block based on the sidelink synchronization signal block being prioritized over the sidelink message. The operations of 1010 may be performed in accordance with examples as disclosed herein. In some examples, aspects of the operations of 1010 may be performed by a channel access procedure component 830 as described with reference to FIG. 8.

At 1015, the method includes transmitting the sidelink synchronization signal block on the first resource based on the channel access procedure indicating that the radio frequency spectrum band is available for transmission. The operations of 1015 may be performed in accordance with examples as disclosed herein. In some examples, aspects of the operations of 1015 may be performed by a sidelink synchronization signal block transmitter 835 as described with reference to FIG. 8.

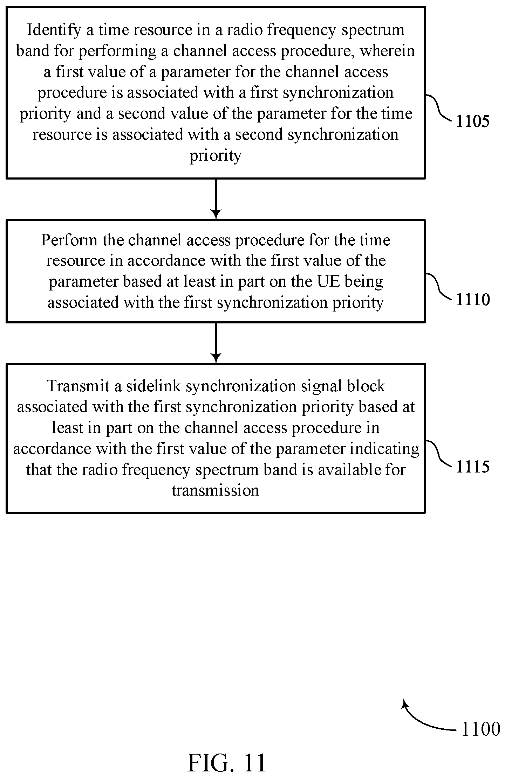

FIG. 11 shows a flowchart illustrating a method 1100 that supports sidelink synchronization signal transmission prioritization in accordance with aspects of the present disclosure. The operations of the method 1100 may be implemented by a UE or its components as described herein. For example, the operations of the method 1100 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1105, the method includes identifying a time resource in a radio frequency spectrum band for performing a channel access procedure, where a first value of a parameter for the channel access procedure is associated with a first synchronization priority and a second value of the parameter for the time resource is associated with a second synchronization priority. The operations of 1105 may be performed in accordance with examples as disclosed herein. In some examples, aspects of the operations of 1105 may be performed by a resource identifier 825 as described with reference to FIG. 8.

At 1110, the method includes performing the channel access procedure for the time resource in accordance with the first value of the parameter based on the UE being associated with the first synchronization priority. The operations of 1110 may be performed in accordance with examples as disclosed herein. In some examples, aspects of the operations of 1110 may be performed by a channel access procedure component 830 as described with reference to FIG. 8.

At 1115, the method includes transmitting a sidelink synchronization signal block associated with the first synchronization priority based on the channel access procedure in accordance with the first value of the parameter indicating that the radio frequency spectrum band is available for transmission. The operations of 1115 may be performed in accordance with examples as disclosed herein. In some examples, aspects of the operations of 1115 may be performed by a sidelink synchronization signal block transmitter 835 as described with reference to FIG. 8.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

## Claims

1. A method (1000) for wireless communication at a user equipment, UE, comprising:
identifying (1005), in a radio frequency spectrum band, a first resource for a sidelink synchronization signal block and a second resource for a sidelink message, the first resource overlapping in time with the second resource, and a first starting time of the first resource occurring before a second starting time of the second resource;
performing (1010) a channel access procedure for the radio frequency spectrum band for the first resource for the sidelink synchronization signal block based at least in part on the sidelink synchronization signal block being prioritized over the sidelink message; and
transmitting (1015) the sidelink synchronization signal block on the first resource based at least in part on the channel access procedure indicating that the radio frequency spectrum band is available for transmission, wherein the radio frequency spectrum band is within an unlicensed spectrum.

2. The method of claim 1, further comprising:
receiving an indication of the first resource and the second resource, wherein identifying the first resource and the second resource is based at least in part on receiving the indication of the first resource and the second resource.

3. The method of any one of claims 1 to 2, further comprising:
performing the channel access procedure before the first starting time of the first resource; and
transmitting a cyclic prefix extension generated from the sidelink synchronization signal block for a time span from the channel access procedure to the first starting time.

4. The method of claim 3, wherein transmitting the cyclic prefix extension for the time span is based at least in part on the first starting time of the first resource being unaligned with a boundary of a symbol.

5. The method of any one of claims 1 to 4, further comprising:
refraining from transmitting the sidelink message over the second resource based at least in part on the first starting time occurring before the second starting time.

6. The method of any one of claims 1 to 5, wherein the sidelink message comprises a sidelink shared channel transmission or a sidelink control channel transmission.

7. The method of any one of claims 1 to 6, wherein the first resource and the second resource overlap in frequency.

8. The method of any one of claims 1 to 7, wherein the sidelink synchronization signal block is transmitted on the first resource during a first time interval, the method further comprising:
performing, during a second time interval, a second channel access procedure for the radio frequency spectrum band during at least a first portion of the first resource for the sidelink synchronization signal block that is before the second resource based at least in part on the sidelink synchronization signal block being prioritized over the sidelink message; and
transmitting the sidelink message on the second resource during the second time interval based at least in part on the second channel access procedure indicating that the radio frequency spectrum band is available for transmission.

9. A method (1100) for wireless communication at a user equipment, UE, comprising:
identifying (1105) a time resource in a radio frequency spectrum band for performing a channel access procedure, wherein a first value of a parameter for the channel access procedure is associated with a first synchronization priority and a second value of the parameter for the time resource is associated with a second synchronization priority;
performing (1110) the channel access procedure for the time resource in accordance with the first value of the parameter based at least in part on the UE being associated with the first synchronization priority; and
transmitting (1115) a sidelink synchronization signal block associated with the first synchronization priority based at least in part on the channel access procedure in accordance with the first value of the parameter indicating that the radio frequency spectrum band is available for transmission, wherein the radio frequency spectrum band is within an unlicensed spectrum.

10. The method of claim 9, further comprising:
receiving an indication of the first value of the parameter and the second value of the parameter, wherein transmitting the sidelink synchronization signal block is based at least in part on receiving the indication.

11. The method of any one of claims 9 to 10, wherein the first value of the parameter corresponds to a first interval in the time resource for performing the channel access procedure and the second value of the parameter corresponds to a second interval in the time resource for performing the channel access procedure;
wherein transmitting the sidelink synchronization signal block of the first synchronization priority is preferably based at least in part on the first interval occurring before the second interval.

12. The method of any one of claims 9 to 11, wherein the first value of the parameter corresponds to a first energy detection threshold for the channel access procedure and the second value of the parameter corresponds to a second energy detection threshold;
wherein transmitting the sidelink synchronization signal block of the first synchronization priority is preferably based at least in part on the first energy detection threshold being higher than the second energy detection threshold.

13. The method of any one of claims 9 to 12, wherein the first synchronization priority and the second synchronization priority are each associated with a different synchronization source of a plurality of synchronization sources, the first synchronization priority being higher than the second synchronization priority.

14. An apparatus for wireless communication at a user equipment, UE, (115) comprising:
a processor;
memory coupled with the processor; and
instructions stored in the memory and executable by the processor to cause the apparatus to:
identify, in a radio frequency spectrum band, a first resource for a sidelink synchronization signal block and a second resource for a sidelink message, the first resource overlapping in time with the second resource, and a first starting time of the first resource occurring before a second starting time of the second resource;
perform a channel access procedure for the radio frequency spectrum band for the first resource for the sidelink synchronization signal block based at least in part on the sidelink synchronization signal block being prioritized over the sidelink message; and
transmit the sidelink synchronization signal block on the first resource based at least in part on the channel access procedure indicating that the radio frequency spectrum band is available for transmission, wherein the radio frequency spectrum band is within an unlicensed spectrum.

15. An apparatus for wireless communication at a user equipment, UE, (115) comprising:
a processor;
memory coupled with the processor; and
instructions stored in the memory and executable by the processor to cause the apparatus to:
identify a time resource in a radio frequency spectrum band for performing a channel access procedure, wherein a first value of a parameter for the channel access procedure is associated with a first synchronization priority and a second value of the parameter for the time resource is associated with a second synchronization priority;
perform the channel access procedure for the time resource in accordance with the first value of the parameter based at least in part on the UE being associated with the first synchronization priority; and
transmit a sidelink synchronization signal block associated with the first synchronization priority based at least in part on the channel access procedure in accordance with the first value of the parameter indicating that the radio frequency spectrum band is available for transmission, wherein the radio frequency spectrum band is within an unlicensed spectrum.

## Patentansprüche

1. Ein Verfahren (1000) für eine drahtlose Kommunikation an einem Benutzergerät (User Equipment bzw. UE), aufweisend:
Identifizieren (1005), in einem Hochfrequenzspektralband, einer ersten Ressource für einen Sidelink-Synchronisationssignalblock und einer zweiten Ressource für eine Sidelink-Nachricht, wobei die erste Ressource in der Zeit mit der zweiten Ressource überlappt und wobei eine erste Startzeit der ersten Ressource vor einer zweiten Startzeit der zweiten Ressource auftritt,
Durchführen (1010) einer Kanalzugriffsprozedur für das Hochfrequenzspektralband für die erste Ressource für den Sidelink-Synchronisationssignalblock basierend wenigstens teilweise darauf, dass der Sidelink-Synchronisationssignalblock gegenüber der Sidelink-Nachricht priorisiert ist, und
Senden (1015) des Sidelink-Synchronisationssignalblocks auf der ersten Ressource basierend wenigstens teilweise darauf, dass die Kanalzugriffsprozedur angibt, dass das Hochfrequenzspektralband für das Senden verfügbar ist, wobei das Hochfrequenzspektralband in einem nicht-lizensierten Spektrum enthalten ist.

2. Verfahren nach Anspruch 1, das weiterhin aufweist:
Empfangen einer Angabe der ersten Ressource und der zweiten Ressource, wobei das Identifizieren der ersten Ressource und der zweiten Ressource wenigstens teilweise auf dem Empfangen der Angabe der ersten Ressource und der zweiten Ressource basiert.

3. Verfahren nach Anspruch 1 oder 2, das weiterhin aufweist:
Durchführen der Kanalzugriffsprozedur vor der ersten Startzeit der ersten Ressource, und
Senden einer zyklischen Präfixerweiterung, die von dem Sidelink-Synchronisationssignalblock generiert wird, für eine Zeitspanne von der Kanalzugriffsprozedur bis zu der ersten Startzeit.

4. Verfahren nach Anspruch 3, wobei das Senden der zyklischen Präfixerweiterung für die Zeitspanne bzw. über die Zeitspanne hinweg wenigstens teilweise darauf basiert, dass die erste Startzeit der ersten Ressource nicht mit einer Grenze eines Symbols ausgerichtet ist.

5. Verfahren nach einem der Ansprüche 1 bis 4, das weiterhin aufweist:
Unterlassen des Sendens der Sidelink-Nachricht über die zweite Ressource basierend wenigstens teilweise darauf, dass die erste Startzeit vor der zweiten Startzeit auftritt.

6. Verfahren nach einem der Ansprüche 1 bis 5, wobei die Sidelink-Nachricht eine Sidelink-Gemeinsamer-Kanal-Sendung oder eine Sidelink-Steuerkanal-Sendung ist.

7. Verfahren nach einem der Ansprüche 1 bis 6, wobei die erste Ressource und die zweite Ressource sich in der Frequenz überlappen.

8. Verfahren nach einem der Ansprüche 1 bis 7, wobei der Sidelink-Synchronisationssignalblock auf der ersten Ressource während eines ersten Zeitintervalls gesendet wird, wobei das Verfahren weiterhin aufweist:
Durchführen, während eines zweiten Zeitintervalls, einer zweiten Kanalzugriffsprozedur für das Hochfrequenzspektralband während wenigstens eines ersten Teils der ersten Ressource für den Sidelink-Synchronisationssignalblock, der der zweiten Ressource vorausgeht, basierend wenigstens teilweise darauf, dass der Sidelink-Synchronisationssignalblock gegenüber der Sidelink-Nachricht priorisiert ist, und
Senden der Sidelink-Nachricht auf der zweiten Ressource während des zweiten Zeitintervalls basierend wenigstens teilweise darauf, dass die zweite Kanalzugriffsprozedur angibt, dass das Hochfrequenzspektralband für das Senden verfügbar ist.

9. Ein Verfahren (1100) für eine drahtlose Kommunikation an einem Benutzergerät (User Equipment bzw. UE), aufweisend:
Identifizieren (1105) einer Zeitressource in einem Hochfrequenzspektralband für das Durchführen einer Kanalzugriffsprozedur, wobei ein erster Wert eines Parameters für die Kanalzugriffsprozedur mit einer ersten Synchronisationspriorität assoziiert ist und ein zweiter Wert des Parameters für die Zeitressource mit einer zweiten Synchronisationspriorität assoziiert ist,
Durchführen (1110) der Kanalzugriffsprozedur für die Zeitressource gemäß dem ersten Wert des Parameters basierend wenigstens teilweise darauf, dass das UE mit der ersten Synchronisationspriorität assoziiert ist, und
Senden (1115) eines mit der ersten Synchronisationspriorität assoziierten Sidelink-Synchronisationssignalblocks basierend wenigstens teilweise darauf, dass die Kanalzugriffsprozedur gemäß dem ersten Wert des Parameters angibt, dass das Hochfrequenzspektralband für das Senden verfügbar ist, wobei das Hochfrequenzspektralband in einem nicht-lizensierten Spektrum enthalten ist.

10. Verfahren nach Anspruch 9, das weiterhin aufweist:
Empfangen einer Angabe des ersten Werts des Parameters und des zweiten Werts des Parameters, wobei das Senden des Sidelink-Synchronisationssignalblocks wenigstens teilweise auf dem Empfangen der Angabe basiert.

11. Verfahren nach Anspruch 9 oder 10, wobei der erste Wert des Parameters einem ersten Intervall in der Zeitressource für das Durchführen der Kanalzugriffsprozedur entspricht und der zweite Wert des Parameters einem zweiten Intervall in der Zeitressource für das Durchführen der Kanalzugriffsprozedur entspricht,
wobei das Senden des Sidelink-Synchronisationssignalblocks der ersten Synchronisationspriorität vorzugsweise wenigstens teilweise darauf basiert, dass das erste Intervall vor dem zweiten Intervall auftritt.

12. Verfahren nach einem der Ansprüche 9 bis 11, wobei der erste Wert des Parameters einem ersten Energieerfassungsschwellenwert für die Kanalzugriffsprozedur entspricht und der zweite Wert des Parameters einem zweiten Energieerfassungsschwellenwert entspricht,
wobei das Senden des Sidelink-Synchronisationssignalblocks der ersten Synchronisationspriorität vorzugsweise wenigstens teilweise darauf basiert, dass der erste Energieerfassungsschwellenwert höher als der zweite Energieerfassungsschwellenwert ist.

13. Verfahren nach einem der Ansprüche 9 bis 12, wobei die erste Synchronisationspriorität und die zweite Synchronisationspriorität jeweils mit einer anderen Synchronisationsquelle aus einer Vielzahl von Synchronisationsquellen assoziiert sind, wobei die erste Synchronisationspriorität höher als die zweite Synchronisationspriorität ist.

14. Eine Vorrichtung für eine drahtlose Kommunikation an einem Benutzergerät (User Equipment bzw. UE) (115), aufweisend:
einen Prozessor,
einen Speicher, der mit dem Prozessor gekoppelt ist, und
Befehle, die in dem Speicher gespeichert sind und durch den Prozessor ausgeführt werden können, um die Vorrichtung zu veranlassen zum:
Identifizieren, in einem Hochfrequenzspektralband, einer ersten Ressource für einen Sidelink-Synchronisationssignalblock und einer zweiten Ressource für eine Sidelink-Nachricht, wobei die erste Ressource in der Zeit mit der zweiten Ressource überlappt und wobei eine erste Startzeit der ersten Ressource vor einer zweiten Startzeit der zweiten Ressource auftritt,
Durchführen einer Kanalzugriffsprozedur für das Hochfrequenzspektralband für die erste Ressource für den Sidelink-Synchronisationssignalblock basierend wenigstens teilweise darauf, dass der Sidelink-Synchronisationssignalblock gegenüber der Sidelink-Nachricht priorisiert ist, und
Senden des Sidelink-Synchronisationssignalblocks auf der ersten Ressource basierend wenigstens teilweise darauf, dass die Kanalzugriffsprozedur angibt, dass das Hochfrequenzspektralband für das Senden verfügbar ist, wobei das Hochfrequenzspektralband in einem nicht-lizensierten Spektrum enthalten ist.

15. Eine Vorrichtung für eine drahtlose Kommunikation an einem Benutzergerät (User Equipment bzw. UE) (115), aufweisend:
einen Prozessor,
einen Speicher, der mit dem Prozessor gekoppelt ist, und
Befehle, die in dem Speicher gespeichert sind und durch den Prozessor ausgeführt werden können, um die Vorrichtung zu veranlassen zum:
Identifizieren einer Zeitressource in einem Hochfrequenzspektralband für das Durchführen einer Kanalzugriffsprozedur, wobei ein erster Wert eines Parameters für die Kanalzugriffsprozedur mit einer ersten Synchronisationspriorität assoziiert ist und ein zweiter Wert des Parameters für die Zeitressource mit einer zweiten Synchronisationspriorität assoziiert ist,
Durchführen der Kanalzugriffsprozedur für die Zeitressource gemäß dem ersten Wert des Parameters basierend wenigstens teilweise darauf, dass das UE mit der ersten Synchronisationspriorität assoziiert ist, und
Senden eines mit der ersten Synchronisationspriorität assoziierten Sidelink-Synchronisationssignalblocks basierend wenigstens teilweise darauf, das die Kanalzugriffsprozedur gemäß dem ersten Wert des Parameters angibt, dass das Hochfrequenzspektralband für das Senden verfügbar ist, wobei das Hochfrequenzspektralband in einem nicht-lizensierten Spektrum enthalten ist.

## Revendications

1. Procédé (1000) de communication sans fil mis en oeuvre par un équipement utilisateur UE, comprenant :
identifier (1005), dans une bande de spectre de fréquences radio, une première ressource pour un bloc de signal de synchronisation de liaison latérale (sidelink) et une seconde ressource pour un message de liaison latérale, la première ressource se chevauchant dans le temps avec la seconde ressource, et un premier instant de début de la première ressource survenant avant un second instant de début de la seconde ressource ;
effectuer (1010) une procédure d'accès au canal pour la bande de spectre de fréquences radio pour la première ressource pour le bloc de signal de synchronisation de liaison latérale sur la base, au moins en partie, du bloc de signal de synchronisation de liaison latérale étant priorisé par rapport au message de liaison latérale ; et
transmettre (1015) le bloc de signal de synchronisation de liaison latérale sur la première ressource sur la base, au moins en partie, de la procédure d'accès au canal indiquant que la bande de spectre de fréquences radio est disponible pour la transmission, dans lequel la bande de spectre de fréquences radio est dans un spectre sans licence.

2. Procédé selon la revendication 1, comprenant en outre :
recevoir une indication de la première ressource et de la seconde ressource, dans lequel l'identification de la première ressource et de la seconde ressource est basée, au moins en partie, sur la réception de l'indication de la première ressource et de la seconde ressource.

3. Procédé selon l'une quelconque des revendications 1 à 2, comprenant en outre :
effectuer la procédure d'accès au canal avant le premier instant de début de la première ressource ; et
transmettre une extension de préfixe cyclique générée à partir du bloc de signal de synchronisation de liaison latérale pour un intervalle de temps allant de la procédure d'accès au canal au premier instant de début.

4. Procédé selon la revendication 3, dans lequel la transmission de l'extension de préfixe cyclique pour l'intervalle de temps est basée, au moins en partie, sur le premier instant de début de la première ressource étant non aligné avec une frontière d'un symbole.

5. Procédé selon l'une quelconque des revendications 1 à 4, comprenant en outre :
s'abstenir de transmettre le message de liaison latérale sur la seconde ressource sur la base, au moins en partie, du premier instant de début survenant avant le second instant de début.

6. Procédé selon l'une quelconque des revendications 1 à 5, dans lequel le message de liaison latérale comprend une transmission de canal partagé de liaison latérale ou une transmission de canal de commande de liaison latérale .

7. Procédé selon l'une quelconque des revendications 1 à 6, dans lequel la première ressource et la seconde ressource se chevauchent en fréquence.

8. Procédé selon l'une quelconque des revendications 1 à 7, dans lequel le bloc de signal de synchronisation de liaison latérale est transmis sur la première ressource pendant un premier intervalle de temps, le procédé comprenant en outre :
effectuer, pendant un second intervalle de temps, une seconde procédure d'accès au canal pour la bande de spectre de fréquences radio pendant au moins une première partie de la première ressource pour le bloc de signal de synchronisation de liaison latérale qui est avant la seconde ressource sur la base, au moins en partie, du bloc de signal de synchronisation de liaison latérale étant priorisé par rapport au message de liaison latérale ; et
transmettre le message de liaison latérale sur la seconde ressource pendant le second intervalle de temps sur la base, au moins en partie, de la seconde procédure d'accès au canal indiquant que la bande de spectre de fréquences radio est disponible pour la transmission.

9. Procédé (1100) de communication sans fil mis en oeuvre dans un équipement utilisateur UE, comprenant :
identifier (1105) une ressource temporelle dans une bande de spectre de fréquences radio pour effectuer une procédure d'accès au canal, dans lequel une première valeur d'un paramètre pour la procédure d'accès au canal est associée à une première priorité de synchronisation et une seconde valeur du paramètre pour la ressource temporelle est associée à une seconde priorité de synchronisation ;
effectuer (1110) la procédure d'accès au canal pour la ressource temporelle conformément à la première valeur du paramètre sur la base, au moins en partie, de l'UE étant associé à la première priorité de synchronisation ; et
transmettre (1115) un bloc de signal de synchronisation de liaison latérale (sidelink) associé à la première priorité de synchronisation sur la base, au moins en partie, de la procédure d'accès au canal conformément à la première valeur du paramètre indiquant que la bande de spectre de fréquences radio est disponible pour la transmission, dans lequel la bande de spectre de fréquences radio est dans un spectre sans licence.

10. Procédé selon la revendication 9, comprenant en outre :
recevoir une indication de la première valeur du paramètre et de la seconde valeur du paramètre, dans lequel la transmission du bloc de signal de synchronisation de liaison latérale est basée, au moins en partie, sur la réception de l'indication.

11. Procédé selon l'une quelconque des revendications 9 à 10, dans lequel la première valeur du paramètre correspond à un premier intervalle dans la ressource temporelle pour effectuer la procédure d'accès au canal et la seconde valeur du paramètre correspond à un second intervalle dans la ressource temporelle pour effectuer la procédure d'accès au canal ;
dans lequel la transmission du bloc de signal de synchronisation de liaison latérale de la première priorité de synchronisation est de préférence basée, au moins en partie, sur le premier intervalle survenant avant le second intervalle.

12. Procédé selon l'une quelconque des revendications 9 à 11, dans lequel la première valeur du paramètre correspond à un premier seuil de détection d'énergie pour la procédure d'accès au canal et la seconde valeur du paramètre correspond à un second seuil de détection d'énergie ;
dans lequel la transmission du bloc de signal de synchronisation de liaison latérale de la première priorité de synchronisation est de préférence basée, au moins en partie, sur le premier seuil de détection d'énergie étant supérieur au second seuil de détection d'énergie.

13. Procédé selon l'une quelconque des revendications 9 à 12, dans lequel la première priorité de synchronisation et la seconde priorité de synchronisation sont chacune associées à une source de synchronisation différente d'une pluralité de sources de synchronisation, la première priorité de synchronisation étant supérieure à la seconde priorité de synchronisation.

14. Dispositif de communication sans fil d'un équipement utilisateur, UE, (115) comprenant:
un processeur ;
une mémoire couplée au processeur ; et
des instructions stockées dans la mémoire et exécutables par le processeur pour amener le dispositif à :
identifier, dans une bande de spectre de fréquences radio, une première ressource pour un bloc de signal de synchronisation de liaison latérale et une seconde ressource pour un message de liaison latérale, la première ressource se chevauchant dans le temps avec la seconde ressource, et un premier instant de début de la première ressource survenant avant un second instant de début de la seconde ressource ;
effectuer une procédure d'accès au canal pour la bande de spectre de fréquences radio pour la première ressource pour le bloc de signal de synchronisation de liaison latérale sur la base, au moins en partie, du bloc de signal de synchronisation de liaison latérale étant priorisé par rapport au message de liaison latérale ; et
transmettre le bloc de signal de synchronisation de liaison latérale sur la première ressource sur la base, au moins en partie, de la procédure d'accès au canal indiquant que la bande de spectre de fréquences radio est disponible pour la transmission, dans lequel la bande de spectre de fréquences radio est dans un spectre sans licence.

15. Dispositif de communication sans fil d'un équipement utilisateur, UE, (115) comprenant:
un processeur ;
une mémoire couplée au processeur ; et
des instructions stockées dans la mémoire et exécutables par le processeur pour amener le dispositif à :
identifier une ressource temporelle dans une bande de spectre de fréquences radio pour effectuer une procédure d'accès au canal, dans lequel une première valeur d'un paramètre pour la procédure d'accès au canal est associée à une première priorité de synchronisation et une seconde valeur du paramètre pour la ressource temporelle est associée à une seconde priorité de synchronisation ;
effectuer la procédure d'accès au canal pour la ressource temporelle conformément à la première valeur du paramètre sur la base, au moins en partie, de l'UE étant associé à la première priorité de synchronisation ; et
transmettre un bloc de signal de synchronisation de liaison latérale associé à la première priorité de synchronisation sur la base, au moins en partie, de la procédure d'accès au canal conformément à la première valeur du paramètre indiquant que la bande de spectre de fréquences radio est disponible pour la transmission, dans lequel la bande de spectre de fréquences radio est dans un spectre sans licence.
